Europäisches Patentamt

European Patent Office

Office européen des brevets

(19)

(11) **EP 0 907 402 B1**

(12) **EUROPÄISCHE PATENTSCHRIFT**

(45) Veröffentlichungstag und Bekanntmachung des Hinweises auf die Patenterteilung:
**23.05.2001 Patentblatt 2001/21**

(21) Anmeldenummer: **97930395.5**

(22) Anmeldetag: **24.06.1997**

(51) Int Cl.7: **B01D 53/70**, B01D 53/86, A62D 3/00, C25C 3/22, C01B 23/00

(86) Internationale Anmeldenummer:
**PCT/EP97/03318**

(87) Internationale Veröffentlichungsnummer:
**WO 97/49479 (31.12.1997 Gazette 1997/57)**

(54) **VERFAHREN ZUR ENTFERNUNG OZONABBAUENDER UND/ODER KLIMAWIRKSAMER FLUORIERTER VERBINDUNGEN AUS EINEM GASSTROM SOWIE ANWENDUNG DES VERFAHRENS**

METHOD OF REMOVING, FROM A STREAM OF GAS, FLUORINATED COMPOUNDS WHICH CONTRIBUTE TO DESTRUCTION OF THE OZONE LAYER AND/OR CHANGES IN CLIMATE, AND USE OF THE METHOD

PROCEDE D'ELIMINATION DE COMPOSES FLUORES DETRUISANT LA COUCHE D'OZONE ET/OU AGISSANT SUR LE CLIMAT, CONTENUS DANS UN COURANT GAZEUX ET UTILISATION DUDIT PROCEDE

(84) Benannte Vertragsstaaten:
**DE ES FR GB IT NL**

(30) Priorität: **26.06.1996 DE 19625607**
**12.05.1997 DE 19719834**

(43) Veröffentlichungstag der Anmeldung:
**14.04.1999 Patentblatt 1999/15**

(73) Patentinhaber: **CS CLEAN SYSTEMS AG**
**85732 Ismaning (DE)**

(72) Erfinder:
• **SCHOLZ, Christoph**
**D-83666 Waakirchen (DE)**
• **HOLZINGER, Walter**
**D-82041 Deisenhofen (DE)**
• **MARKERT, Karl**
**D-85635 Höhenkirchen-Siegertsbrunn (DE)**
• **KOPATZKI, Eckard**
**D-85635 Höhenkirchen-Siegertsbrunn (DE)**

(74) Vertreter: **Berngruber, Otto, Dr. Dipl.-Chem.**
**Patentanwälte**
**Haft, von Puttkamer**
**Berngruber, Czybulka**
**Franziskanerstrasse 38**
**81669 München (DE)**

(56) Entgegenhaltungen:
EP-A- 0 117 338    EP-A- 0 412 456
EP-A- 0 667 180    DE-A- 2 525 089
DE-A- 4 311 061    US-A- 4 528 080

• DATABASE WPI Section Ch, Week 9129 Derwent Publications Ltd., London, GB; Class E19, AN 91-212459 XP002044151 & JP 03 135 410 A (MITSUBISHI HEAVY IND CO LTD) , 10.Juni 1991

**Beschreibung**

Die Erfindung bezieht sich auf ein Verfahren zur Entfernung fluorierter ozonabbauender und/oder klimawirksamer fluorierter Kohlenwasserstoffen aus einem Gasstrom, welcher durch ein festes erwärmtes Sorbens geleitet wird. Sie hat auch Anwendungen dieses Verfahrens zum Gegenstand.

Fluorkohlenwasserstoffe, und zwar sowohl perfluorierte (FKW) wie teilfluorierte (H-FKW) und Fluorchlorkohlenwasserstoffe (FCKW und H-FCKW) werden seit Jahrzehnten als Treibmittel, Kältemittel, Bläh- und Trennmittel, Löse- und Reinigungsmittel und anderes mehr in großem Umfang eingesetzt.

Sie weisen jedoch ein hohes ODP (Ozone Depletion Potential), also ozonabbauendes Potential auf und werden deshalb maßgeblich für den Abbau der Ozonschicht in der Atmosphäre verantwortlich gemacht. Durch ihr Infrarot-Absorptionsspektrum und die z. T. extrem lange atmosphärische Lebensdauer besitzen sie ferner ein hohes GWP (Greenhouse Warming Potential), d.h. sie haben am Treibhauseffekt einen wesentlichen Anteil. Dazu ist auf folgende Tabelle hinzuweisen:

Atmosphärische Lebensdauer und Treibhauspotential (GWP) von FKWs und H-FKWs und anderen Gasen

| Substanz | Lebensdauer (Jahre) | GWP (Integriert über 100 Jahre) |
|---|---|---|
| $CO_2$ (Referenz) | 100 | 1 |
| $CF_4$ | 50000 | 6300 |
| $C_2F_6$ | 10000 | 12500 |
| $SF_6$ | 3200 | 24900 |
| $NF_3$ | 180 | 9720 |
| $CHF_3$ | 250 | 12100 |
| $CH_2F_2$ | 6 | 485 |
| $C_2HF_5$ | 36 | 2740 |
| $C_2H_2F_4$ | 18 | 1330 |

(vgl. Michael T. Mocella, DuPont Fluoroproducts "Long-Lived and Greenhouse Gases in the Semiconductor Industry: A Review of Science, Policy, and Technology" Journal of the Semiconductor Safety Association, Band 8, Nr. 4, Seite 13, Dezember 1994 sowie "Radiative Forcing of Climate Change", veröffentlicht in Climate Change - The IPCC Scientific Assessment, Herausgeber J.T. Houghton, G.J. Jenkins, and J.J. Ephraums, Cambridge University Press, Cambridge, November 1994.)

Aus DE 44 04 329 C1 ist bereits ein Verfahren nach dem Oberbegriff des Anspruchs 1 bekannt. Dabei wird als Sorbens ein Phyllosilikat verwendet, das Eisenoxid enthält. Das bekannte Verfahren hat sich zwar im Großen und Ganzen bewährt. Jedoch muß das Sorben auf eine relativ hohe Temperatur erwärmt werden, beispielsweise zur Sorption von $CF_4$ bis auf 350° C. Auch läßt die Sorptionskapazität des Sorbens noch zu wünschen übrig.

Aus EP 0 412 456 A2 ist es bekannt, Fluorkohlenwasserstoffe mit Wasserdampf bei 350 bis 1000°C an einem Aluminiumoxid-Katalysator zu Chlorwasserstoff, Fluorwasserstoff, Kohlendioxid und Kohlenmonoxid sowie weiteren Verbindungen, wie Trifluoressigsäurechlorid, zu zersetzen. Die Entfernung und Entsorgung dieser zum Teil sehr aggressiven und toxischen Zersetzungsprodukte ist jedoch mit einem erheblichen Aufwand verbunden.

Aufgabe der Erfindung ist es, ozonabbauende und/oder klimawirksame perfluorierte oder teilfluorierte gesättigte oder ungesättigte Kohlenwasserstoffe mit ein bis vier Kohlenstoffatomen im Molekül mit geringem Aufwand aus einem Gasstrom zu entfernen.

Dies wird erfindungsgemäß mit dem im Anspruch 1 gekennzeichneten Verfahren erreicht. In den Ansprüchen 2 bis 5 sind vorteilhafte Ausgestaltungen des erfindungsgemäßen Verfahrens wiedergegeben. Die Ansprüche 6 bis 14 haben bevorzugte Anwendungen des erfindungsgemäßen Verfahrens zum Gegenstand.

Nach der Erfindung müssen der Gasstrom und das γ-Aluminiumoxid-Sorbens, durch das er geleitet wird, wasserfrei sein. Überraschenderweise wird damit das Fluor, das in den ozonabbauenden und/oder klimawirksamen perfluorierten oder teilfluorierten gesättigten oder ungesättigten Kohlenwasserstoffen mit 1 bis 4 Kohlenstoffatomen im Molekül enthalten ist, quantitativ und irreversibel an dem γ-Aluminiumoxid-Sorbens als Aluminiumfluorid gebunden, und zwar bei einer eher moderaten Temperatur von z.B. 200 bis 400°C. Falls es sich bei dem perfluorierten oder teilfluorierten gesättigten oder ungesättigten Kohlenwasserstoff mit 1 bis 4 Kohlenstoffatomen im Molekül um einen Kohlenwasserstoff handelt, der außer mit Fluor mit Chlor halogeniert ist, ist in gleicher Weise eine quantitative Bindung des Chlors zusammen mit dem Fluor an dem Sorbens festzustellen.

Nach dem erfindungsgemäßen Verfahren können damit alle im Oberbegriff des Anspruchs 1 beschriebenen ozonabbauenden und/oder klimawirksamen Verbindungen entfernt werden.

Dazu gehören perfluorierte (FKW) oder teilfluorierte (H-FKW) gesättigte oder ungesättigte Kohlenwasserstoffe mit 1 bis 4 Kohlenstoffatomen im Molekül, aber auch solche fluorierten Kohlenwasserstoffe mit 1 bis 4 Kohlenstoffatomen im Molekül, die außer mit Fluor mit anderen Halogenatomen, insbesondere mit Chlor halogeniert sind, also perhalogenierte (FCKW) wie teilhalogenierte (H-FCKW), gesättigte wie ungesättigte Fluorchlorkohlenwasserstoffe mit 1 bis 4 Kohlenstoffatomen pro Molekül, insbesondere Trichlorfluormethan, Dichlordifluormethan, Bromchlordifluormethan, Dibromdifluormethan, Chlortrifluormethan,Bromtrifluormethan, Tetrafluormethan, Dichlorfluormethan, Chlordifluormethan, Trifluormethan (Fluoroform), Difluormethan (Methylenfluorid), 1,1,2,2-Tetrachlordifluorethan, 1,1,2-Trichlortrifluorethan, 1,2-Dichlortetrafluorethan, 1,2-Dibromtetrafluorethan, Chlorpentafluorethan, Hexafluorethan, 1,2-Dibrom-1,1-difluorethan, 2-Chlor-1,1,1-trifluorethan, 2-Chlor-1,1,1-trifluorethan, 1-Chlor-1,1-difluorethan, 1,1,1-Trifluorethan, 1,1-Difluorethan, Octafluorpropan, Octafluorcyclobutan, Decafluorbutan, 1,1-Dichlordifluorethylen, Chlortrifluorethylen (Trifluorvinylchlorid), 1-Chlor-2,2-difluorethylen, 1,1-Difluorethylen (Vinylidenfluorid).

In diesem Zusammenhang sei erwähnt, dass perfluorierte Kohlenwasserstoffe auch als "FK" (Fluorkohlenstoffe) bezeichnet werden, und teilfluorierte als "FKW" (Fluorkohlenwasserstoffe).

Wegen ihrer hohen Reaktionsträgheit, die sich in ihrer atmosphärischen Lebensdauer niederschlägt, ist das erfindungsgemäße Verfahren insbesondere zur Entfernung von Tetrafluormethan ($CF_4$) und Hexafluorethan ($C_2F_6$) geeignet.

Zudem ist das erfindungsgemäße Verfahren zur Beseitigung von Stickstofftrifluorid ($NF_3$) und Schwefelhexafluorid ($SF_6$) anwendbar.

Bei dem erfindungsgemäßen Verfahren wird das Fluor in der fluorierten Verbindung mit dem γ-Aluminiumoxid-Sorbens quantitativ umgesetzt. Die Umsetzung erfolgt dabei mit Tetrafluormethan beispielsweise nach folgender Reaktionsglei-chung:

$$3\ CF_4 + 2\ Al_2O_3 \rightarrow 4\ AlF_3 + 3\ CO_2$$

d.h. es entsteht zwar $CO_2$ als Spaltprodukt, das jedoch, wie der vorstehenden Tabelle zu entnehmen, ein um mehrere Größenordnungen geringeres GWP besitzt als das zu beseitigende Tetrafluormethan, so daß das bei dem erfindungsgemäßen Verfahren freigesetzte $CO_2$ hinsichtlich des GWP zu vernachlässigen ist.

In gleicher Weise wird bei der Entfernung von Stickstofftrifluorid und Schwefelhexafluorid nach dem erfindungsgemäßen Verfahren das Fluor am Sorbens quantitativ und irreversibel gebunden.

Wie Versuche gezeigt haben, wird der Gehalt der fluorierten Verbindungen nach dem erfindungsgemäßen Verfahren beim Durchtritt durch das γ-Aluminiumoxid-Sorbens um mindestens 99%, insbesondere 99,9% reduziert, und zwar selbst der des besonders reaktionsträgen $CF_4$.

Die fluorierte Verbindung kann mit einem Trägergas dem Sorbens zugeführt werden. Als Trägergas kann ein Inertgas, wie Stickstoff oder ein Edelgas, eingesetzt werden.

Das Trägergas kann jedoch auch ein anderes Gas, wie Luft oder auch Sauerstoff sein. Insbesondere wenn ein FKW mit mehr als einem Kohlenstoffatom pro Molekül umgesetzt werden soll, wird Sauerstoff zugeführt. Beispielsweise erfolgt die Umsetzung von Hexafluorethan nach folgender Reaktionsgleichung:

$$2\ C_2F_6 + 2\ Al_2O_3 + O_2 \rightarrow 4\ AlF_3 + 4\ CO_2$$

Um eine quantitative Umwandlung in $CO_2$ zu erreichen und die Produktion von CO zu unterdrücken, werden 2 bis 20 Mol Sauerstoff je C-Atom im Molekül eingesetzt. Durch den Zusatz von Sauerstoff bzw. Luft wird zugleich die Reaktionstemperatur wesentlich herabgesetzt.

Das Trägergas soll dabei wasserfrei sein. Das heißt, es kann ein technisches Gas sein, gegebenenfalls auch Umgebungsluft. Jedenfalls muß dafür Sorge getragen werden, dass das Trägergas keine weitere Feuchtigkeit aufnimmt. Falls das zu reinigende Gas Wasserspuren enthält, werden diese vorzugsweise mit einem Molekularsieb entfernt, bevor das Gas dem γ-Aluminiumsorbens zugeführt wird. Vorzugsweise enthält das zu reinigende Gas weniger als 1000 ppm, insbesondere weniger als 100 ppm Wasser. Jedenfalls ist der Anteil des Fluors der fluorierten Verbindung, der an dem γ-Aluminiumoxid sorbiert wird, um so größer, je trockener das Trägergas ist. Das Aluminiumoxid wird durch seine Erwärmung auf deutlich über 100°C während der Sorption auf einem hinreichend trockenen Zustand gehalten.

Das γ-Aluminiumoxid besitzt vorzugsweise eine Reinheit von mehr als 99,0 %. Vorzugsweise wird ein γ-Aluminiumoxid mit einer BET-Oberfläche von mehr als 50 m²/g, insbesondere mehr als 200 m²/g und einem Porenvolumen von mehr als 0,2 cm³/g verwendet. Der mittlere Porendurchmesser kann z.B. 2 - 50 nm betragen, insbesondere 5 - 15 nm. Eine große spezifische Oberfläche des γ-Aluminiumoxids ist erforderlich, weil das Fluor der fluorierten Verbindung in erster Linie an der Oberfläche des γ-Aluminiumoxids als Aluminiumfluorid gebunden wird.

Das Aluminiumoxid kann in reiner Form oder in Kombination mit anderen Substanzen eingesetzt werden.

Beispielsweise können Mischungen von Zeolithen und Alumi-niumoxid und/oder Aluminiumhydroxid eingesetzt werden. Der Anteil des Aluminiumoxids und/oder Aluminiumhydroxids in dem Sorbens sollte jedoch wenigstens 10 Gew.-%, vorzugsweise wenigstens 30 Gew.-% betragen.

Das Aluminiumoxid bzw. Aluminiumhydroxid kann mit Metallen der Gruppe Ia, IIa, IVa, Ib, IIb, IVb, VIb, VIIb und VIIIb dotiert sein. Auch kann das Sorbens Zuschläge aus Oxiden und anderen Verbindungen dieser Metalle enthalten.

Das Sorbens kann ein Festbett oder ein Fließbett sein. Das Sorbens kann auf eine Temperatur bis 1000°C erwärmt werden. Vorzugsweise wird das erfindungsgemäße Verfahren jedoch mit einer Temperatur des Sorbens zwischen Raumtemperatur und 600°C durchgeführt. Die Temperatur des Sorbens hängt dabei von der zu absorbierenden fluorierten Verbindung ab. So wird beispielsweise Tetrafluormethan bereits bei etwa 150°C nach dem erfindungsgemäßen Verfahren absorbiert, und Hexafluorethan ab etwa 180°C. Im allgemeinen liegt die Temperatur des Sorbens zwischen 250 und 450°C.

Das erfindungsgemäße Verfahren wird vorzugsweise bei Atmosphärendruck durchgeführt. Es kann jedoch auch mit Unterdruck oder mit einem Druck von beispielsweise bis zu 20 bar durchgeführt werden.

Die Raumgeschwindigkeit kann beispielsweise 10 bis 1000 h$^{-1}$ (Gesamtvolumenstrom l/h/Katalysatorvolumen 1) betragen, was einer Verweilzeit von 0,1 bis 0,001 h entspricht. Vorzugsweise liegt die Raumgeschwindigkeit zwischen 50 und 500 h$^{-1}$ bzw. die Verweilzeit zwischen 0,02 und 0,002 h. Dabei wird, wie erwähnt, die fluorierte Verbindung vorzugsweise mit einem Trägergas zugeführt, wobei die Konzentration der fluorierten Verbindung in dem Trägergas stark schwanken kann, beispielsweise zwischen 0,001 bis 20 Vol.-%.

Das erfindungsgemäße Verfahren kann zur Entsorgung von ozonabbauenden und/klimawirksamen fluorierten Verbindungen verwendet werden. Nach Schätzungen sind gegenwärtig weltweit mehr als 2 Millionen Tonnen fluorierter Kohlenwasserstoffe in Isolierschäumen, Kälteanlagen und in Form gebunkerter Vorräte im Umlauf. Bei dem erfindungsgemäßen Verfahren werden die zu entsorgenden fluorierten Verbindungen quantitativ und irreversibel von dem festen Sorbens gebunden. Das heißt es entstehen keine ozonabbauenden und, abgesehen von einer vernachlässigbar geringen Mengen Kohlendioxid, auch keine klimawirksamen Zersetzungs- oder Reaktionsprodukte. Auch wenn das Sorbens gesättigt ist, werden keine derartigen Zersetzungs- und Reaktionsprodukte abgegeben. Bei Sättigung des Sorbens kann die austretende fluorierte Verbindung beispielsweise mit einem nachgeschalteten Festbett mit dem Sorbens gebunden werden, also beispielsweise einem weiteren, mit festen Sorbens gefüllten Behälter entsprechend der DE-41 02 969 C1.

Das erfindungsgemäße Verfahren kann mit einem Reaktor beliebiger Größe durchgeführt werden, der normalerweise lediglich beheizbar zu sein braucht. Es ist damit ohne weiteres auch diskontinuierlich und dezentral durchführbar, z.B. im Rahmen der kommunalen Abfallbeseitigung.

In der Halbleiterindustrie werden zum Trockenätzen große Mengen von perfluorierten Verbindungen verwendet, die auch als PFC (Perfluorinated Compounds) bezeichnet werden. Dazu gehören insbesondere Tetrafluorkohlenstoff (CF$_4$), Trifluormethan (CHF$_3$), Hexafluorethan (C$_2$F$_6$) sowie Schwefelhexafluorid (SF$_6$) und Stickstofftrifluorid (NF$_3$). Aus diesen Verbindungen wird beispielsweise durch elektrische Entladung Fluor gebildet, mit dem das Halbleitersubstrat, beispielsweise ein -Silizium-Wafer, geätzt wird. Diese perfluorierten Verbindungen sind extrem reaktionsträge. Sie werden daher von den Abgasreinigungsanlagen, die in der Halbleiterindustrie verwendet werden, nicht erfaßt und damit an die Atmosphäre abgegeben. Die Erfindung ist daher insbesondere auch für Abgasreinigungsanlagen in der Halbleiterindustrie anwendbar.

Besonders geeignet zur Reinigung von Abgasen, die ozonabbauende und/oder klimawirksame fluorierte Verbindungen enthalten, ist eine Vorrichtung, die eine Sorptionseinrichtung mit zwei Kammern aufweist, die jeweils ein festes stationäres erfindungsgemäßes Sorbens für die ozonabbauenden und/oder klimawirksamen fluorierten Verbindungen enthalten und über eine Heizeinrichtung miteinander kommunizieren. Die beiden Kammern sind zur Umkehrung der Strömungsrichtung des zu reinigenden Abgases abwechselnd mit der Gaszufuhr für das zu reinigende Abgas verbindbar. Diese Vorrichtung wird in der deutschen Patentanmeldung 195 32 279.7 beschrieben.

Dabei werden folgende Schritte durchgeführt:

a) das Sorbens in einer der beiden Kammern wird zumindest teilweise auf eine zur Zersetzung der ozonabbauenden und/oder klimawirksamen fluorierten Verbindungen erforderliche Temperatur erwärmt,

b) das zu reinigende Abgas wird bei eingeschalteter Heizeinrichtung der auf diese Temperatur erwärmten einen, ersten Kammer zugeführt, und darin gereinigt,

c) das aus der ersten Kammer austretende gereinigte Abgas strömt nach Erwärmung in der Heizeinrichtung in die zweite Kammer, bis dessen Sorbens zumindest teilweise die für die Zersetzung der ozonabbauenden und/oder klimawirksamen fluorierten Verbindungen erforderliche Temperatur erreicht hat,

d) das zu reinigende Abgas wird der zweiten Kammer zugeführt und dann gereinigt,

e) das aus der zweiten Kammer austretende gereinigte Abgas strömt nach Erwärmung in der Heizeinrichtung in die erste Kammer, bis dessen Sorbens zumindest teilweise die für die Zersetzung der ozonabbauenden und/oder klimawirksamen fluorierten Verbindungen erforderliche Temperatur erreicht hat,

f) die Schritte (b) bis (e) werden wiederholt.

Der Schritt (a) wird durchgeführt, indem bei eingeschalteter Heizeinrichtung der zweiten Kammer ein inertes Trägergas zugeführt wird.

Eine weitere wichtige Anwendung des erfindungsgemäßen Verfahrens stellt die Entfernung von perfluorierten Kohlenwasserstoffen dar, die bei der Aluminiumherstellung durch Elektrolyte von Aluminiumoxid in geschmolzenem Kryolith mit kohlenstoffhaltigen Elektroden gebildet werden.

Die Schmelzelektrolyse wird dabei in Wannen durchgeführt, deren Seitenwände und Boden mit einem als Kathode dienenden Kohlefutter ausgekleidet sind, beispielsweise eine Kohle-Teer-Mischung. Als Anoden werden Kohleblöcke verwendet, die an einem mit dem positivem Strom der Stromquelle verbundenen Traggerüst in den geschmolzenen Kryolith, also $Na_3$ [$AlF_6$] oder $3NaF$ . $AlF_3$ hängen, in dem etwa 15 bis 20 Gew.-% Aluminiumoxid bei einer Badtemperatur von ungefähr $950°C$ gelöst sind.

Bei dieser Schmelzelektrolyse setzt sich ein Teil des Kryolith mit den kohlenstoffhaltigen Elektroden um. Dies führt einerseits zu einem Kryolithverbrauch in der Schmelze und zum anderen zur Bildung von Fluorkohlenwasserstoffen, insbesondere zur Bildung von Tetrafluormethan und Hexafluorethan. Demgemäß ist die Aluminiumherstellung durch Elektrolyse von Aluminiumoxid in geschmolzenem Kryolith mit kohlenstoffhaltigen Elektroden für über 90 % der weltweiten Tetrafluormethan-Emission verantwortlich.

Nach dem erfindungsgemäßen Verfahren kann der aus der Kryolith/Aluminumoxidschmelze austretende Fluorkohlenwasserstoff mit dem Aluminumoxid- und/oder Aluminiumhydroxid-Sorbens gebunden werden.

Dazu wird die Schmelzelektrolyse in einer geschlossenen Wanne oder dergleichen Gefäß durchgeführt, welches mit wenigstens einer Gasaustrittsöffnung für den in der Schmelze gebildeten Fluorkohlenwasserstoff versehen ist, welcher durch das Aluminumoxid- und/oder Aluminiumhydroxid-Sorbens geleitet wird, das auf eine zur Absorption des Fluorkohlenstoffs ausreichende Temperatur erwärmt wird.

Gegebenenfalls kann auch ein Luft- oder anderer Gas-Strom über das Schmelzbad geleitet werden, indem beispielsweise an dem Auslaß des Behälters, der das Sorbens enthält, ein Gebläse angeschlossen wird, welches Luft bzw. ein annderes Gas über das Schmelzbad saugt.

Auf diese Weise wird nicht nur verhindert, dass die bei der Aluminiumherstellung gebildeten Fluorkohlenwasserstoffe in die Atmosphäre gelangen, sondern zugleich aus dem Aluminiumoxid bzw. Aluminiumhydroxid Aluminiumfluorid, also $AlF_3$, gebildet, also der Bestandteil des Kryolith, der bei der Schmelzelektrolyse verbraucht wird.

Das mit dem Fluorkohlenwasserstoff zu Aluminiumfluorid umgesetzte Aluminiumoxid- und/oder Aluminiumhydroxid-Sorbens kann dann der Kryolith/Aluminiumoxid-Schmelze zugegeben werden, um bei der Elektrolyse verbrauchten Kryolith zu ersetzen.

Bei Gasen, die kryotechnisch, also durch Luftverflüssigung und anschließende fraktionierte Destillation der verflüssigten Luft gewonnen werden, sammeln sich diese Spurenverunreinigungen in dem jeweiligen Gas mehr oder weniger stark an. Besonders hohe Verunreinigungen an diesen fluorierten Verbindungen treten naturgemäß in solchen kryotechnisch gewonnenen Gasen auf, die einerseits in der Luft nur in sehr geringer Menge vorkommen und damit entsprechend angereichert werden müssen und die andererseits durch fraktionierte Destillation nicht oder nur schwer von solchen fluorierten Verbindungen getrennt werden können, die in der Luft in besonders hoher Konzentration enthalten sind. Dies gilt insbesondere für Edelgase, und zwar vor allem für Krypton und Xenon, die in der Luft nur in einer Menge von ca. $1 \times 10^{-4}$ bzw. $8 \times 10^{-6}$ Vol.% vorkommen und sich andererseits beispielsweise von $CF_4$ und $SF_6$, die in der Luft in einer nicht unerheblichen Menge enthalten sind, durch fraktionierte Destillation nur schwer abtrennen lassen.

Während zur Entfernung anderer Spurenverunreinigungen, wie Kohlendioxid, Kohlenmonoxid, Kohlenwasserstoffe, Wasserdampf, Sauerstoff, Stickstoff und dgl. aus einem zu reinigendem Gas wirksame Maßnahmen, wie Molekularsiebe, sogenannte Metall-Getter und dgl. zur Verfügung stehen, ist die Entfernung dieser fluorierten Verbindungen aus einem zu reinigenden Gas mit erheblichen Schwierigkeiten verbunden, da diese in der Atmosphäre sich ansammelnden Verbindungen naturgemäß extrem inert sind. Dies gilt gleichermaßen für die Nachreinigung anderer, nicht kryotechnisch hergestellte Reinstgase.

Mit dem erfindungsgemäßen Verfahren ist es nunmehr möglich, auch Gase, die Perfluorierte oder teilfluorierte gesättigte oder ungesättigte Kohlenwasserstoffe mit 1 - 4 C-Atomen im Molekül als Spurenverunreinigungen enthalten, wirksam zu reinigen.

Das erfindungsgemäße Verfahren ist dabei insbesondere zur Reinigung von Gasen geeignet, die aus der Luft kryotechnisch gewonnen werden, also durch Luftverflüssigung und fraktionierte Destillation der verflüssigten Luft.

Dazu gehören insbesondere die Edelgase, also Helium, Neon, Argon, Krypton und Xenon, aber auch Sauerstoff und Stickstoff.

Damit lassen sich diese Gase erfindungsgemäß als Reinstgase gewinnen, bei denen der Gehalt obiger fluorierter Verbindungen weniger als 10 ppm, vorzugsweise weniger als 1 ppm oder gar weniger als 0,1 ppm beträgt.

Mit dem erfindungsgemäßen Verfahren können Reinstgase nach-gereinigt werden, die ein Reinheit von mindestens 99,9 % (= Qualitätsklasse 3.0) aufweisen. Damit ist zugleich eine Erhöhung der Qualitätsklassen möglich. So sind im Handel derzeit beispielsweise Argon und Helium nur in der maximalen Qualitätsklasse 7,0 erhältlich, Krypton mit maximal etwa 4,5 und Neon mit maximal etwa 4,0. Durch das erfindungsgemäße Verfahren kann die maximal erhältliche Qualitätsklasse der Edelgase wesentlich erhöht werden. Gleiches gilt für die Nachreinigung anderer Reinstgase, wie Sauerstoff oder Stickstoff, sowie für solche Reinstgase, die nicht durch Luftzerlegung erhalten werden, aber dennoch geringe Mengen obiger fluorierter Verbindungen als Fremdgasanteil enthalten.

Das erfindungsgemäße Verfahren kann z. B. zur Gewinnung von Krypton und Xenon in einer Tieftemperaturluftzerlegungsanlage zum Einsatz kommen, wobei Krypton und Xenon zu einem Krypton- und Xenon-Konzentrat angereichert werden und mittels Destillation Krypton und/oder Xenon aus dem Krypton-Xenon-Konzentrat gewonnen werden. Das Krypton-Xenon-Konzentrat oder das Krypton oder das Xenon werden dann in einem festen Sorbens aus $\gamma$-Aluminiumoxid gereinigt, wobei aus dem Krypton-Xenon-Konzentrat oder dem Krypton bzw. Xenon die Fluorkohlenwasserstoffe, wie $CF_4$, und $SF_6$, entfernt werden.

Wenn die fluorierten Verbindungen, die aus dem Reinstgas entfernt werden sollen, aus der fluorierten oder teilfluorierten Kohlenwasserstoffen bestehen, entsteht bei der Sorbtion der per- oder teilfluorierten Kohlenwasserstoffe an dem $\gamma$-Aluminiumoxid-Sorbens als gasförmiges Zersetzungsprodukt $CO_2$. Das so gebildete $CO_2$ kann durch ein nachgeschaltetes $CO_2$-Sorbens aus dem zu reinigenden Gas entfernt werden, beispielsweise durch ein Molekularsieb, insbesondere einen Zeolith. Bei perfluorierten Verbindungen mit mehr als einem C-Atom kann auch CO entstehen, und bei $SF_6$ z. B. $SO_2$, die in gleicher Weise entfernt werden können.

Die nachstehenden Beispiele dienen der weiteren Erläuterung der Erfindung.

Beispiel 1

Ein beheizbarer Festbett-Mikroreaktor wird mit $\gamma$-Aluminiumoxid (Reinheit > 99,6 Gew.-%) mit Spuren- an $SiO_2$, $Na_2O$ und $TiO_2$ (insgesamt < 0,4 Gew.-%), einer BET-Oberfläche von 250 - 255 $m^2/g$, einem Porenvolumen von 0,70 - 0,90 $cm^3/g$ und einem mittleren Porendurchmesser von 8 - 9 nm gefüllt.

Dem Mikroreaktor wird Tetrafluormethan ($CF_4$) mit einer Konzentration von 1 Vol.-% in Helium als Trägergas zugeführt. Die Raumgeschwindigkeit beträgt 158 $h^{-1}$, der Gesamtmassefluß 35 sccm (Standard-Kubikzentimeter). Die Temperatur des Sorbens wird von Raumtemperatur auf 520°C erwärmt. Die Gaszusammensetzung wird mit einem Gaschromatographen mit einem Molsieb-(MS04) und einer Porablot Q-Säule (PQ08) untersucht.

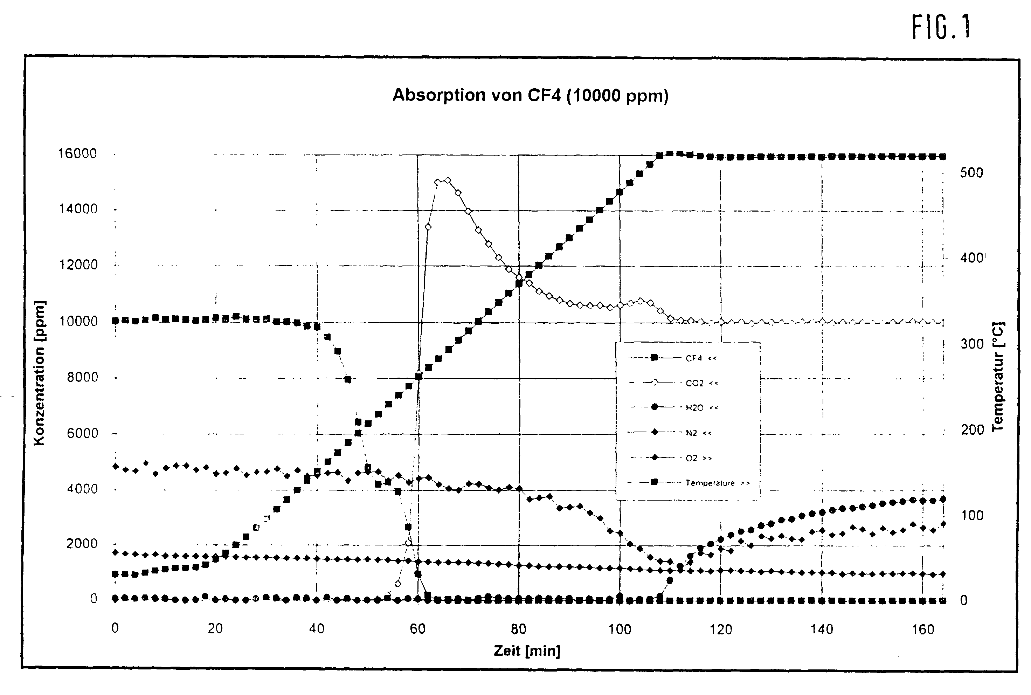

In der beigefügten Fig. 1 ist die Absorption des $CF_4$ wiedergegeben. Es ist ersichtlich, dass die Absorption bei etwa 140°C beginnt und bei etwa 290°C quantitativ verläuft.

Beispiel 2

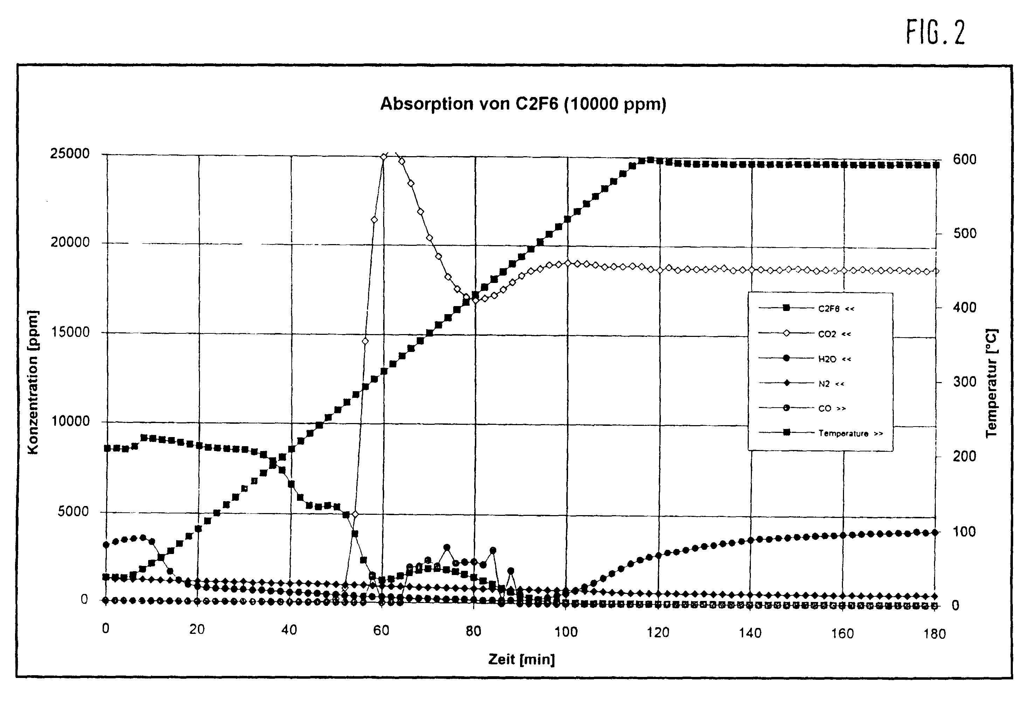

Das Beispiel 1 wird wiederholt, außer dass dem Mikroreaktor statt $CF_4$ Hexafluorethan ($C_2F_6$) zugeführt wird. Wie der beigefügten Fig. 2 zu entnehmen, beginnt die Absorption von $C_2F_6$ bei etwa 180°C und ist ab 480°C quantitativ.

**Patentansprüche**

1. Verfahren zur Entfernung von ozonabbauenden und/oder klimawirksamen perfluorierten oder teilfluorierten gesättigten oder ungesättigten Kohlenwasserstoffen mit 1 bis 4 Kohlenstoffatomen im Molekül, auch solche, die außer mit Fluor mit anderen Halogenatomen halogeniert sind, aus einem Gasstrom, der durch ein festes Sorbens geleitet wird,

   dadurch gekennzeichnet, daß als Sorbens $\gamma$-Aluminiumoxid verwendet wird und der Gasstrom und das $\gamma$-Aluminiumoxid-Sorbens, durch das er geleitet wird, wasserfrei sind, wobei das in der fluorierten Verbindung enthaltene Fluor an dem $\gamma$-Aluminiumoxid-Sorbens quantitativ und irreversibel als Aluminiumfluorid gebunden wird.

2. Verfahren nach Anspruch 1, dadurch gekennzeichnet, daß das Sorbens aus einer Mischung von $\gamma$-Aluminiumoxid und einem Zeolith besteht.

3. Verfahren nach Anspruch 1, dadurch gekennzeichnet, daß $\gamma$-Aluminiumoxid eine Reinheit von mindestens 99,0 Gew.-% besitzt.

# EP 0 907 402 B1

4. Verfahren nach einem der vorhergehenden Ansprüche, dadurch gekennzeichnet, dass das Sorbens auf eine Temperatur von maximal 600°C erwärmt wird.

5. Verfahren nach Anspruch 1, dadurch gekennzeichnet, dass bei einem Fluorkohlenwasserstoff mit mehr als einem Kohlenstoffatom pro Molekül als zu entfernender fluorierter Verbindung dem Sorbens Sauerstoff zugeführt wird.

6. Anwendung des Verfahrens nach einem der vorstehenden Ansprüche zur Entsorgung ozonabbauender und/oder klimawirksamer fluorierter Verbindungen.

7. Anwendung des Verfahrens nach einem der Ansprüche 1 bis 5 zur Entfernung der bei der Aluminiumherstellung durch Elektrolyse von Aluminiumoxid in geschmolzenem Kryolith mit kohlenstoffhaltigen Elektroden gebildeten Fluorkohlenwasserstoffe.

8. Anwendung nach Anspruch 7, dadurch gekennzeichnet, dass das mit den Fluorkohlenwasserstoffen umgesetzte Aluminiumoxid-Sorbens der Kryolith/Aluminiumoxid-Schmelze zugegeben wird.

9. Anwendung des Verfahrens nach einem der Ansprüche 1 bis 5 zur Reinigung von Gasen, die die Kohlenwasserstoffe nach Anspruch 1 als Verunreinigungen enthalten.

10. Anwendung nach Anspruch 9, dadurch gekennzeichnet, daß das zu reinigende Gas ein aus Luft kryotechnisch gewonnenes Gas ist.

11. Anwendung nach Anspruch 9 oder 10, dadurch gekennzeichnet, daß das zu reinigende Gas ein Reinstgas mit einer Reinheit von mindestens 99,9 Gew.% ist.

12. Anwendung nach einem der Ansprüche 9 bis 11, dadurch gekennzeichnet, daß das zu reinigende Gas ein Edelgas oder Edelgasgemisch, Sauerstoff, Stickstoff, Wasserstoff, Kohlenmonoxid oder Kohlendioxid ist.

13. Anwendung nach Anspruch 12, dadurch gekennzeichnet, daß der Gehalt der Kohlenwasserstoffe nach Anspruch 1 in dem zu reinigenden Gas weniger als 100 ppm beträgt.

14. Anwendung nach einem der Ansprüche 9 bis 13, dadurch gekennzeichnet, daß das bei der Sorption der per- oder teilfluorierten Kohlenwasserstoffe an dem $\gamma$-Aluminiumoxid-Sorbens entstehende Kohlendioxid durch ein nachgeschaltetes Kohlendioxid-Sorbens aus dem zu reinigenden Gas entfernt wird.

**Claims**

1. A process for removing ozone-depleting and/or climate-effecting perfluorinated or partly fluorinated saturated or unsaturated hydrocarbons with 1 to 4 carbon atoms in the molecule, including those halogenated with other halogen atoms besides fluorine from a gas stream which is passed through a solid sorbent, characterized in that the sorbent used is $\gamma$-alumina and the gas stream and the $\gamma$-alumina sorbent through which it is passed are anhydrous, the fluorine contained in the fluorinated compound being bound quantitatively and irreversibly as aluminum fluoride to the $\gamma$-alumina sorbent.

2. The process of claim 1, characterized in that the sorbent consists of a mixture of $\gamma$-alumina and a zeolite.

3. The process of claim 1, characterized in that the $\gamma$-alumina has a purity of at least 99.0 wt%.

4. The process of any of the above claims, characterized in that the sorbent is heated to a temperature of at most 600°C.

5. The process of claim 1, characterized in that oxygen is supplied to the sorbent if a fluorocarbon with more than one carbon atom per molecule is the fluorinated compound to be removed.

6. The use of the process of any of the above claims for disposing of ozone-depleting and/or climate-effecting fluorinated compounds.

7. The use of the process of any of claims 1 to 5 for removing the fluorocarbons formed in aluminum production by electrolysis of alumina in molten cryolite with carbon electrodes.

8. The use of claim 7, characterized in that the alumina sorbent reacted with the fluorocarbons is added to the cryolite/alumina melt.

9. The use of the process of any of claims 1 to 5 for cleaning gases containing hydrocarbons according to claim 1 as impurities.

10. The use of claim 9, characterized in that the gas to be cleaned is a gas obtained cryogenically from air and irreversibly as aluminum fluoride.

11. The use of claim 9 or 10, characterized in that the gas to be cleaned is a superpure gas with a purity of at least 99.9 wt%.

12. The use of any of claims 9 to 11, characterized in that the gas to be cleaned is a noble gas or noble gas mixture, oxygen, nitrogen, hydrogen, carbon monoxide or carbon dioxide.

13. The use of claim 12, characterized in that the content of hydrocarbons according to claim 1 in the gas to be cleaned is less than 100 ppm.

14. The use of any of claims 9 to 13, characterized in that the carbon dioxide formed on the γ-alumina sorbent during sorption of the perfluorinated or partly fluorinated hydrocarbons is removed from the gas to be cleaned by a carbon dioxide sorbent connected downstream.


**Revendications**

1. Procédé d'élimination hors d'un courant gazeux qui est guidé par un sorbant solide, d'hydrocarbures saturés ou non saturés, fluorés ou partiellement fluorés, dégradant l'ozone et/ou agissant sur le climat, contenant 1 à 4 atomes de carbone par molécule, aussi d'hydrocarbures qui, en dehors du fluor, sont halogénés avec d'autres atomes d'halogène, caractérisé en ce que le sorbant utilisé est de l'oxyde d'aluminium γ et en ce que le courant gazeux et le sorbant en oxyde d'aluminium γ, à travers lequel il est guidé, sont anhydres, le fluor contenu dans la composition fluorée étant lié, sous forme de fluorure d'aluminium, quantitativement et irréversiblement au sorbant en oxyde d'aluminium γ.

2. Procédé selon la revendication 1, caractérisé en ce que le sorbant est un mélange d'oxyde d'aluminium γ et d'une zéolite.

3. Procédé selon la revendication 1, caractérisé en ce que l'oxyde d'aluminium γ possède une pureté d'au moins 99,0 pour cent en poids.

4. Procédé selon l'une quelconque des revendications précédentes, caractérisé en ce que le sorbant est chauffé à une température maximale de 600°C.

5. Procédé selon la revendication 1, caractérisé en ce que dans le cas d'un hydrocarbure fluoré contenant plus d'un atome de carbone par molécule, on apporte au sorbant de l'oxygène en tant que composition fluorée à éliminer.

6. Application d'un procédé selon l'une quelconque des revendications précédentes pour éliminer des composés fluorés dégradant l'ozone et/ou agissant sur le climat.

7. Application du procédé selon l'une quelconque des revendications 1 à 5 pour éliminer les hydrocarbures fluorés formés à la fabrication de l'aluminium par électrolyse d'oxyde d'aluminium dans de la cryolite fondue avec des électrodes contenant du carbone.

8. Application selon la revendication 7, caractérisée en ce que le sorbant d'oxyde d'aluminium converti avec les hydrocarbures fluorés est ajouté à la fusion de cryolite/oxyde d'aluminium.

9. Application du procédé selon l'une quelconque des revendications 1 à 5 pour nettoyer des gaz qui contiennent comme polluants des hydrocarbures selon la revendication 1.

10. Application selon la revendication 9, caractérisée en ce que le gaz à nettoyer est un gaz obtenu par cryogénie à partir d'air.

11. Application selon la revendication 9 ou 10, caractérisée en ce que le gaz à nettoyer est un gaz extra-pur d'une pureté d'au moins 99,9 pour cent en poids.

12. Application selon la revendication 9 ou 10, caractérisée en ce que le gaz à nettoyer est un gaz rare ou un mélange gazeux rare, de l'oxygène, de l'azote, de l'hydrogène, du monoxyde de carbone ou du dioxyde de carbone.

13. Application selon la revendication 12, caractérisée en ce que la teneur en hydrocarbures selon la revendication 1, dans le gaz à nettoyer, est inférieure à 100 ppm.

14. Application selon l'une quelconque des revendications 9 à 13, caractérisée en ce que le dioxyde de carbone formé sur le sorbant d'oxyde d'aluminium $\gamma$ à la sorption des hydrocarbures fluorés ou partiellement fluorés est éliminé du gaz à nettoyer par un sorbant de gaz carbonique disposé en aval.

# FIG. 1

Absorption von CF4 (10000 ppm)

FIG. 2

Absorption von C2F6 (10000 ppm)

EP 0 907 402 B1